# EUROPEAN PATENT SPECIFICATION

(11) **EP 4 604 117 B1**
(45) Date of publication and mention of the grant of the patent: **13.05.2026**
(21) Application number: 25155992.8
(22) Date of filing: 05.02.2025
(51) Int. Cl.: G10L 15/18, G01N 21/88, G06F 3/16, G06Q 50/04, G10L 21/10

(54) **METHOD AND SYSTEM FOR A VOICE ASSISTED QUALITY INSPECTION**
VERFAHREN UND SYSTEM FÜR SPRACHUNTERSTÜTZTE QUALITÄTSKONTROLLE
PROCÉDÉ ET SYSTÈME D'INSPECTION DE QUALITÉ ASSISTÉE PAR LA VOIX

(30) Priority: 14.02.2024 IN 202421010270
(43) Date of publication of application: 20.08.2025
(73) Proprietor: Tata Consultancy Services Limited, Maharashtra (IN)
(72) Inventor: SHARMA, Himanshu, 411057 Pune, Maharashtra (IN); VISHWAKARMA, Arpit, 411057 Pune, Maharashtra (IN); MALHOTRA, Chetan Premkumar, 411057 Pune, Maharashtra (IN); BASAVARSU, Purushottham Gautham, 411057 Pune, Maharashtra (IN)
(74) Representative: Goddar, Heinz J.

(56) References cited:
- CN-A- 111 127 699
- CN-A- 113 449 125
- JP-A- 2008 215 971
- JP-B2- 7 342 519
- US-B2- 7 020 580

## Description

### CROSS-REFERENCE TO RELATED APPLICATIONS AND PRIORITY

The present application claims priority from Indian patent application number 202421010270, filed on February 14, 2024.

### TECHNICAL FIELD

The disclosure herein generally relates to the field of a voice assisted defect inspection, and more particularly, a method and system for a voice assisted defect logging and quality inspection.

### BACKGROUND

At present, industries like paint shops use handwritten notes or digital diaries for logging paint defects during quality inspection. These kind of inspections in the industries are time bound. This method of registering defects during quality inspection can take a lot of time as inspectors have to inspect the parts and then note down the defects in a notepad or a tablet, in certain sensitive inspection cases inspectors are required to use gloves while inspecting which leads to added overhead of working with gloves while noting down the defects. Sharing of these defect logs also becomes difficult as they first must be digitized to be shared across the different units in the industry.

Some of the technical component such as voice processor with noise reduction, large language models (LLM) are available as siloed technological advancement. However, these solutions focus on leveraging the domain model of artifact under inspection to utilise the listed technologies in a way that provide radical benefits, including higher accuracy of speech to text conversion by combining voice processor and LLM with domain models. It is due to domain model structure ability to map defect on artifact during visualisation, due to domain-based persistence seamless digitised integration with other ecosystems.

CN 111 127 699 A discloses an automobile defect data automatic input method, an automobile defect data automatic input system, an automobile defect data automatic input device and a medium. The automobile defect data automatic input method comprises the steps of: receiving audio data of a user; performing voice recognition on the audio data, and determining defect information corresponding to the audio data; acquiring a defect region image of a defect position of an automobile; identifying the defect region image, and determining identification information of a defect region; and storing the defect information and the identification information of the defect region. According to the automobile auditing auxiliary scheme provided by this document, an intelligent auxiliary function is provided for an auditing process by combining voice recognition, image recognition and other technologies, defect information and identification information of the defect region are automatically input, and the auditing efficiency and precision are improved.

### SUMMARY

Embodiments of the present disclosure present technological improvements as solutions to one or more of the above-mentioned technical problems recognized by the inventors in conventional systems. For example, in one embodiment, a method for a voice assisted defect logging and quality inspection is provided. The processor-implemented method includes receiving, via an Input/Output (I/O) interface, one or more voice inputs from an inspector while inspecting an artifact, wherein the artifact is a physical entity subjected to inspection. The one or more voice inputs of the inspector are pre-processed to remove noise using a predefined filtering technique. The one or more pre-processed voice inputs is converted into a predefined language text using a predefined language translation technique to ensure uniformity, wherein the predefined language translation technique includes a universal language model, and a custom speech model. Herein, a voice to text conversion model is integrated with the large language model and a domain model of artifact to convert one or more defects spoken by the inspector into the one or more structured defects represented by the domain model. The defect type, the defect location and the sub-section of the artifact is identified from the one or more voice inputs from the inspector. The predefined language text is transformed into one or more structured defects for a structured defect log on a domain model of artifact under inspection using a large language model (LLM). Further, the structured defect log is analyzed to map a defect name, a defect type, and a defect location to each sub-section of the physical entity represented in the domain model using the large language model (LLM). Finally, the analyzed one or more structured defects are converted into a voice format to facilitate an effective communication to a user for repair and for reporting purpose. Herein, the one or more structured defects are represented in at least one of an orthogonal view, a two-dimensional (2D) view, a three-dimensional (3D) view of the artifact being inspected for verification.

In another embodiment, a system for a voice assisted defect logging and quality inspection is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, one or more voice inputs from an inspector while inspecting an artifact, wherein the artifact is a physical entity subjected to inspection. The one or more pre-processed voice inputs is converted into a predefined language text using a predefined language translation technique to ensure uniformity, wherein the predefined language translation technique includes a universal language model, and a custom speech model. Herein, a voice to text conversion model is integrated with the large language model and a domain model of artifact to convert one or more defects spoken by the inspector into the one or more structured defects represented by the domain model. The defect type, the defect location and the sub-section of the artifact is identified from the one or more voice inputs from the inspector. The one or more hardware processors are configured by the instructions to transform the predefined language text into one or more structured defects for a structured defect log on a domain model of artifact under inspection using a large language model (LLM). Further, the structured defect log is analyzed to map a defect name, a defect type, and a defect location to each sub-section of the physical entity represented in the domain model using the large language model (LLM). Finally, the one or more hardware processors are configured by the instructions to convert the analyzed one or more structured defects into a voice format to facilitate an effective communication to a user for repair and for reporting purposes. Herein, the one or more structured defects are represented in at least one of an orthogonal view, a two-dimensional (2D) view, a three-dimensional (3D) view of the artifact being inspected for verification.

In yet another aspect, there are provided one or more non-transitory machine-readable information storage mediums comprising one or more instructions, which when executed by one or more hardware processors causes a method for a voice assisted defect logging and quality inspection is provided. The processor-implemented method includes receiving, via an Input/Output (I/O) interface, one or more voice inputs from an inspector while inspecting an artifact, wherein the artifact is a physical entity subjected to inspection. The one or more voice inputs of the inspector are pre-processed to remove noise using a predefined filtering technique. The one or more pre-processed voice inputs is converted into a predefined language text using a predefined language translation technique to ensure uniformity, wherein the predefined language translation technique includes a universal language model, and a custom speech model. Herein, a voice to text conversion model is integrated with the large language model and a domain model of artifact to convert one or more defects spoken by the inspector into the one or more structured defects represented by the domain model. The defect type, the defect location and the sub-section of the artifact is identified from the one or more voice inputs from the inspector. The predefined language text is transformed into one or more structured defects for a structured defect log on a domain model of artifact under inspection using a large language model (LLM). Further, the structured defect log is analyzed to map a defect name, a defect type, and a defect location to each sub-section of the physical entity represented in the domain model using the large language model (LLM). Finally, the analyzed one or more structured defects are converted into a voice format to facilitate an effective communication to a user for repair and for reporting purpose. Herein, the one or more structured defects are represented in at least one of an orthogonal view, a two-dimensional (2D) view, a three-dimensional (3D) view of the artifact being inspected for verification.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a voice assisted defect logging and quality inspection, according to some embodiments of the present disclosure.
FIG. 2 is a functional block diagram to illustrate a system for a voice assisted defect logging and quality inspection, according to some embodiments of the present disclosure.
FIG. 3 is an exemplary flow diagram illustrating a processor-implemented method for a voice assisted defect logging and quality inspection, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

At present, industries like paint shops uses handwritten notes or digital diaries for logging paint defects during quality inspection. These kind of inspections in the industries are time bound. This method of registering defects during quality inspection can take a lot of time as inspectors have to inspect the parts and then note down the defects in a notepad or a tablet, in certain sensitive inspection cases inspectors are required to use gloves while inspecting which leads to added overhead of working with gloves while noting down the defects. Sharing of these defect logs also becomes difficult as they first must be digitized to be shared across the different units in the industry.

Embodiments herein provide a method and system for a voice assisted defect logging and quality inspection. The system is configured to log the defects identified by inspectors using inspector's voice. Further, the system identifies the defect type, defect location, and defect part from inspector speech and marks the defect in an orthogonal view, a two-dimensional (2D), and a three-dimensional (3D) view of artifact being inspected for easy verification. The system also allows for marking the defects as unresolved / being corrected / resolved during the repair or rework process.

The system is a solution transforming the defect inspection and correction during inspection process for artifact during manufacturing. The system helps in seamlessly integrating a voice to text conversion model with the large language model and a domain model of artifact to convert one or more defects spoken by the inspector into the one or more structured defects represented by the domain model of artifact. From the user's perspective, this approach offers many benefits. The system provides inspectors with real-time display of defect details on a screen as they voice-record them. This feature ensures immediate confirmation and enhances the inspector's situational awareness during the inspection process. Leveraging a domain model of artifact (for example, car), system automatically maps the recorded sentences to specific car details, including car type, inspector name, defect count, part type, specific part, defect type, and defect location. This automated mapping significantly reduces the manual effort required and enhances accuracy.

Further, the system introduces a standardized, digital approach to defect recording, addressing the need for consistency in automotive inspection practices. This simplifies the workflow for inspectors, contributing to a more efficient and organized inspection process. By combining voice-based input with advanced language models, the system significantly improves the accuracy and speed of defect logging. This minimizes errors in defect descriptions, enhances overall inspection efficiency, and contributes to a more effective automotive inspection process.

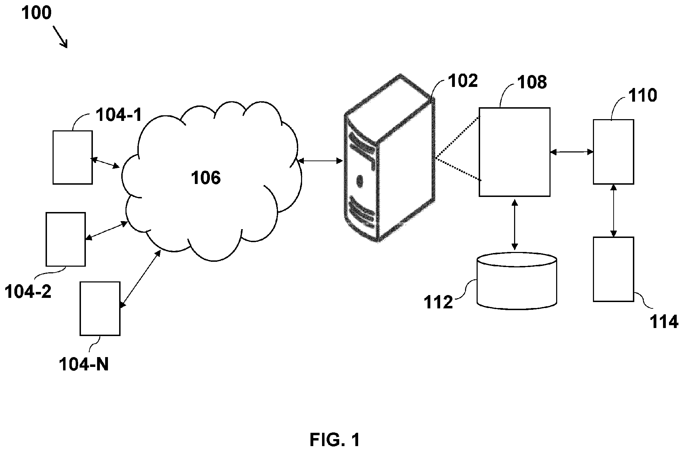

Referring now to the drawings, and more particularly to FIG. 1 through FIG. 3, where similar reference characters denote corresponding features consistently throughout the figures, there are shown preferred embodiments, and these embodiments are described in the context of the following exemplary system and/or method.

FIG. 1 illustrates a block diagram of a system for a voice assisted defect logging and quality inspection, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

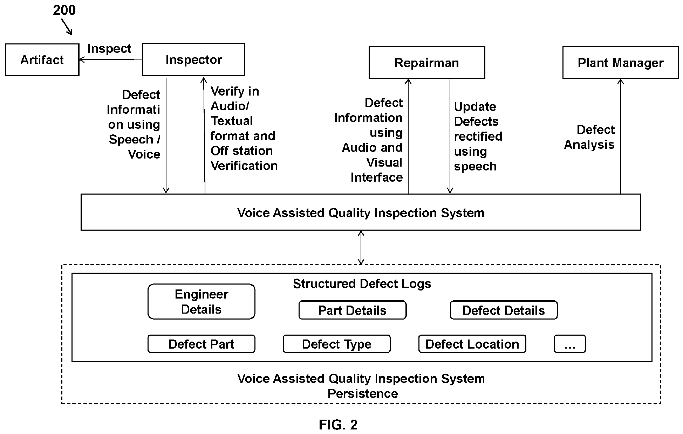

FIG. 2 is a functional block diagram 200 to illustrate a voice assisted defect inspection, according to some embodiments of the present disclosure. In one embodiment, the system 100 is also configured for marking the defects as resolved during the repair or rework process. An inspector visually identifies defects on the artifact and communicates this information to the system 100 using voice-based input. Following this, the inspector engages with the system 100 to verify the defect details, both in audio and textual formats, ensuring accurate and complete defect logging.

The system 100 receives defect details from the inspector through voice input, converting and storing them in a structured format in the system database. It facilitates verification with the inspector, ensuring precision in defect logging. Additionally, the system supports the off-station verification of defects logged by the inspector, enhancing the thoroughness and accuracy of the quality inspection process. The system 100 communicates identified defects to the repairman for necessary actions and input on the Repaired defects. It also engages with the plant manager for defect analysis. The system 100 ensures a seamless process of defect identification, verification, storage, analysis, and rectification. It leverages voice-assisted technology to enhance the efficiency and accuracy of the quality inspection process.

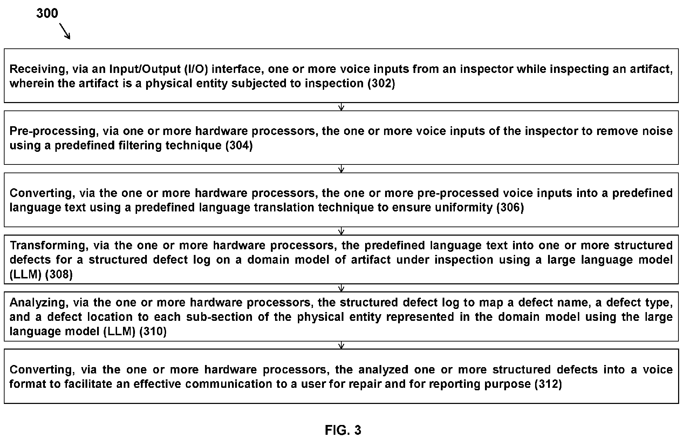

FIG. 3 is a flow diagram illustrating a processor-implemented method 300 for a voice assisted defect logging and quality inspection implemented by the system 100 of FIG. 1. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to receive, via an Input/Output (I/O) interface, one or more voice inputs from an inspector while inspecting an artifact. Herein, the artifact is a physical entity such as a car subjected to inspection. Voice input initiates with the capture of user speech through recording using a microphone, resulting in a representative speech sample. The extracted voice sample forms the foundational input for subsequent processing, setting the stage for structured transformation. The structured transformation represents the organized format in which defect information is logged. The system database updates the structured defect logs with details such as defect type, defect part, and defect location. This structured data aids in efficient defect analysis and reporting.

The artifact represents the physical entity which is subjected to inspection. The inspector visually examines the artifact for any defects during the inspection process. Identified defects are communicated to the system via voice for further processing.

At the next step 304 of the processor-implemented method 300, the one or more hardware processors 108 are configured by the programmed instructions to pre-process the one or more voice inputs of the inspector to remove noise using a predefined filtering technique.

At the next step 306 of the processor-implemented method 300, the one or more hardware processors 108 are configured by the programmed instructions to convert the one or more pre-processed voice inputs into a predefined language text using a predefined language translation technique to ensure uniformity. Wherein the predefined language translation technique includes a universal language model, and a custom speech model.

At the next step 308 of the processor-implemented method 300, the one or more hardware processors 108 are configured by the programmed instructions to transform the predefined language text into one or more structured defects for a structured defect log on a domain model of artifact under inspection using a large language model (LLM). Text to defect involves transforming the converted text into structured defect information, incorporating language translation, structural organization, and detailed logging.

Leveraging the LLM, the translated text is structured and organized to create a structured defect log. The structured defect log serves as a centralized repository, systematically categorizing identified issues for subsequent analysis. Herein, each defect is associated with specific parts and engineer details, thus providing a comprehensive overview within the complete defect log. The complete defect log, enriched with detailed defect information, is stored for future reference and analysis.

At the next step 310 of the processor-implemented method 300, the one or more hardware processors 108 are configured by the programmed instructions to analyze the structured defect log to map a defect name, a defect type, and a defect location to each sub-section of the physical entity represented in the domain model using the large language model (LLM). Herein, the inspectors are allowed to view the logged defects in a structured format, providing an organized overview. Additionally, the one or more structured defects are represented in at least one of an orthogonal view, a two-dimensional (2D) view, a three-dimensional (3D) view of the artifact being inspected for verification.

In one example, wherein an inspector identifies a defect in the paint job of a car. At the inspection area, the inspector utilizes the voice command interface to log a paint defect on the car. Speaking into the system, the inspector articulates, "Dirt nib on right front door center." The voice processor of the system, powered by text to speech API, adeptly captures, and converts inspector's spoken words into accurate text. The transcribed defect description is then presented on the speech verification screen. Inspector reviewing the text in his/her native language, if identifies a slight error and inspector can promptly corrects it using voice commands, ensuring the utmost accuracy in the representation of the defect.

Following the correction, the system processes the defect description, extracting key aspects such as defect type ("Dirt nib"), defect part ("right front door"), location ("Centre"), and the relevant sub-section ("door"). This information is then transformed into semantic structure, providing a structured and standardized format for defect data. Inspector verifies the defect details, confirming their accuracy on the verification screen and completeness before proceeding. Upon Inspector's confirmation, the system seamlessly pushes the verified defect information to the plant's data systems. This ensures that the defect is accurately recorded, facilitating further analysis and appropriate actions to rectify the identified issue.

Finally, at the last step 312 of the processor-implemented method 300, the one or more hardware processors 108 are configured by the programmed instructions to convert the analyzed one or more structured defects into a voice format to facilitate an effective communication to a user for repair and reporting purpose. For repair personnel, this involves accessing detailed defect information, enabling them to carry out repairs efficiently. After addressing the issues, the repair personnel updates the defect log to reflect the rectification, completing the cycle of defect identification and resolution.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of handwritten notes or digital diaries for logging defects during quality inspection. Also, these kinds of inspections in the industries are time bound. This method of registering defects during quality inspection can take a lot of time as inspectors have to inspect the parts and then note down the defects in a notepad or a tablet, in certain sensitive inspection cases inspectors are required to use gloves while inspecting which leads to added overhead of working with gloves while noting down the defects. Sharing of these defect logs also becomes difficult as they first must be digitized to be shared across the different units in the industry. Embodiments herein provide a method and system which logs the defects identified by inspectors using inspector's voice, the system identifies the defect type, location and part from inspector speech and marks the defect in an orthogonal view, a two-dimensional (2D) view, a three-dimensional (3D) view of the artifact being inspected for verification. The system also allows for marking the defects as resolved during the repair or rework process.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
receiving (302), via an Input/Output (I/O) interface, one or more voice inputs from an inspector while inspecting an artifact, wherein the artifact is a physical entity subjected to inspection;
pre-processing (304), via one or more hardware processors, the one or more voice inputs of the inspector to remove noise using a predefined filtering technique;
converting (306), via the one or more hardware processors, the one or more pre-processed voice inputs into a predefined language text using a predefined language translation technique to ensure uniformity;
**characterised in that** the predefined language translation technique includes a universal language model, and a custom speech model, and **in that** the method further comprises:
transforming (308), via the one or more hardware processors, the predefined language text into one or more structured defects for a structured defect log on a domain model of artifact under inspection using a large language model (LLM);
analyzing (310), via the one or more hardware processors, the structured defect log to map a defect name, a defect type, and a defect location to each sub-section of the physical entity represented in the domain model using the large language model (LLM); and
converting (312), via the one or more hardware processors, the analyzed one or more structured defects into a voice format to facilitate an effective communication to a user for repair and for reporting purpose.

2. The processor-implemented method (300) as claimed in claim 1, wherein a voice to text conversion model is integrated with the large language model and the domain model of artifact to convert one or more defects spoken by the inspector into the one or more structured defects represented by the domain model.

3. The processor-implemented method (300) as claimed in claim 1, wherein the defect type, the defect location and the sub-section of the artifact is identified from the one or more voice inputs from the inspector.

4. The processor-implemented method (300) as claimed in claim 1, wherein the one or more structured defects are represented in at least one of an orthogonal view, a two-dimensional (2D) view, a three-dimensional (3D) view of the artifact being inspected for verification.

5. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive one or more voice inputs from an inspector while inspecting an artifact, wherein the artifact is a physical entity subjected to inspection;
pre-process the one or more voice inputs of the inspector to remove noise using a predefined filtering technique;
convert the one or more pre-processed voice inputs into a predefined language text using a predefined language translation technique to ensure uniformity;
**characterised in that** the predefined language translation technique includes a universal language model, and a custom speech model, and **in that** the one or more hardware processors (108) are further configured by the instructions to:
transform the predefined language text into one or more structured defects for a structured defect log on a domain model of artifact under inspection using a large language model (LLM);
analyze the structured defect log to map a defect name, a defect type, and a defect location to each sub-section of the physical entity represented in the domain model using the large language model (LLM); and
convert the analyzed one or more structured defects into a voice format to facilitate an effective communication to a user for repair and for reporting purpose.

6. The system (100) as claimed in claim 5, wherein a voice to text conversion model is integrated with the large language model and the domain model of artifact to convert one or more defects spoken by the inspector into the one or more structured defects represented by the domain model.

7. The system (100) as claimed in claim 5, wherein the defect type, the defect location and the sub-section of the artifact is identified from the one or more voice inputs from the inspector.

8. The system (100) as claimed in claim 5, wherein the one or more structured defects are represented in at least one of an orthogonal view, a two-dimensional (2D) view, a three-dimensional (3D) view of the artifact being inspected for verification.

9. One or more non-transitory machine-readable information storage mediums comprising one or more instructions which when executed by one or more hardware processors cause:
receiving, via an Input/Output (I/O) interface, one or more voice inputs from an inspector while inspecting an artifact, wherein the artifact is a physical entity subjected to inspection;
pre-processing the one or more voice inputs of the inspector to remove noise using a predefined filtering technique;
converting the one or more pre-processed voice inputs into a predefined language text using a predefined language translation technique to ensure uniformity;
**characterised in that** the predefined language translation technique includes a universal language model, and a custom speech model, and **in that** the one or more instructions which when executed by the one or more hardware processors further cause:
transforming the predefined language text into one or more structured defects for a structured defect log on a domain model of artifact under inspection using a large language model (LLM);
analyzing the structured defect log to map a defect name, a defect type, and a defect location to each sub-section of the physical entity represented in the domain model using the large language model (LLM); and
converting the analyzed one or more structured defects into a voice format to facilitate an effective communication to a user for repair and for reporting purposes.

10. The one or more non-transitory machine-readable information storage mediums of claim 9, wherein a voice to text conversion model is integrated with the large language model and the domain model of artifact to convert one or more defects spoken by the inspector into the one or more structured defects represented by the domain model.

11. The one or more non-transitory machine-readable information storage mediums of claim 9, wherein the defect type, the defect location and the sub-section of the artifact is identified from the one or more voice inputs from the inspector.

12. The one or more non-transitory machine-readable information storage mediums of claim 9, wherein the one or more structured defects are represented in at least one of an orthogonal view, a two-dimensional (2D) view, a three-dimensional (3D) view of the artifact being inspected for verification.

## Patentansprüche

1. Prozessorimplementiertes Verfahren (300), umfassend:
Empfangen (302), über eine Eingabe/Ausgabe(E/A)-Schnittstelle, einer oder mehrerer Spracheingaben von einem Inspektor, während ein Artefakt inspiziert wird, wobei das Artefakt eine physische Entität ist, die einer Inspektion unterzogen wird;
Vorverarbeiten (304), über einen oder mehrere Hardwareprozessoren, der einen oder mehreren Spracheingaben des Inspektors, um Rauschen unter Verwendung einer vordefinierten Filtertechnik zu entfernen;
Umwandeln (306), über den einen oder die mehreren Hardwareprozessoren, der einen oder mehreren vorverarbeiteten Spracheingaben in einen vordefinierten Sprachtext unter Verwendung einer vordefinierten Sprachübersetzungstechnik, um Einheitlichkeit sicherzustellen;
**dadurch gekennzeichnet, dass** die vordefinierte Sprachübersetzungstechnik ein universelles Sprachmodell und ein kundenspezifisches Sprachmodell beinhaltet, und dadurch, dass das Verfahren ferner umfasst:
Umwandeln (308), über den einen oder die mehreren Hardwareprozessoren, des vordefinierten Sprachtexts in einen oder mehrere strukturierte Defekte für ein strukturiertes Defektprotokoll auf einem Domänenmodell eines zu inspizierenden Artefakts unter Verwendung eines großen Sprachmodells (LLM);
Analysieren (310), über den einen oder die mehreren Hardwareprozessoren, des strukturierten Defektprotokolls, um einen Defektnamen, einen Defekttyp und eine Defektstelle auf jeden Unterabschnitt der physischen Entität, die in dem Domänenmodell dargestellt ist, unter Verwendung des großen Sprachmodells (LLM) abzubilden; und
Umwandeln (312), über den einen oder die mehreren Hardwareprozessoren, des analysierten einen oder der analysierten mehreren strukturierten Defekte in ein Sprachformat, um eine effektive Kommunikation an einen Benutzer zu Reparatur- und Berichtszwecken zu erleichtern.

2. Prozessorimplementiertes Verfahren (300) nach Anspruch 1, wobei ein Sprache-zu-Text-Umwandlungsmodell mit dem großen Sprachmodell und dem Domänenmodell des Artefakts integriert ist, um einen oder mehrere Defekte, die durch den Inspektor gesprochen werden, in den einen oder die mehreren strukturierten Defekte, die durch das Domänenmodell dargestellt sind, umzuwandeln.

3. Prozessorimplementiertes Verfahren (300) nach Anspruch 1, wobei der Defekttyp, die Defektstelle und der Unterabschnitt des Artefakts aus der einen oder den mehreren Spracheingaben von dem Inspektor identifiziert werden.

4. Prozessorimplementiertes Verfahren (300) nach Anspruch 1, wobei der eine oder die mehreren strukturierten Defekte in mindestens einer von einer orthogonalen Ansicht, einer zweidimensionalen (2D) Ansicht, einer dreidimensionalen (3D) Ansicht des Artefakts, das zur Verifizierung inspiziert wird, dargestellt sind.

5. System (100), umfassend:
einen Speicher (110), der Anweisungen speichert;
eine oder mehrere Eingabe/Ausgabe(E/A)-Schnittstellen (104); und
einen oder mehrere Hardwareprozessoren (108), die über die eine oder die mehreren E/A-Schnittstellen (104) mit dem Speicher (110) gekoppelt sind, wobei der eine oder die mehreren Hardwareprozessoren (108) durch die Anweisungen konfiguriert sind zum:
Empfangen einer oder mehrerer Spracheingaben von einem Inspektor, während ein Artefakt inspiziert wird, wobei das Artefakt eine physische Entität ist, die einer Inspektion unterzogen wird;
Vorverarbeiten der einen oder mehreren Spracheingaben des Inspektors, um Rauschen unter Verwendung einer vordefinierten Filtertechnik zu entfernen;
Umwandeln der einen oder mehreren vorverarbeiteten Spracheingaben in einen vordefinierten Sprachtext unter Verwendung einer vordefinierten Sprachübersetzungstechnik, um Einheitlichkeit sicherzustellen;
**dadurch gekennzeichnet, dass** die vordefinierte Sprachübersetzungstechnik ein universelles Sprachmodell und ein kundenspezifisches Sprachmodell beinhaltet, und dadurch, dass der eine oder die mehreren Hardwareprozessoren (108) ferner durch die Anweisungen konfiguriert sind zum:
Umwandeln des vordefinierten Sprachtexts in einen oder mehrere strukturierte Defekte für ein strukturiertes Defektprotokoll auf einem Domänenmodell eines zu inspizierenden Artefakts unter Verwendung eines großen Sprachmodells (LLM);
Analysieren des strukturierten Defektprotokolls, um einen Defektnamen, einen Defekttyp und eine Defektstelle auf jeden Unterabschnitt der physischen Entität, die in dem Domänenmodell dargestellt ist, unter Verwendung des großen Sprachmodells (LLM) abzubilden; und
Umwandeln des analysierten einen oder der analysierten mehreren strukturierten Defekte in ein Sprachformat, um eine effektive Kommunikation an einen Benutzer zu Reparatur- und Berichtszwecken zu erleichtern.

6. System (100) nach Anspruch 5, wobei ein Sprache-zu-Text-Umwandlungsmodell mit dem großen Sprachmodell und dem Domänenmodell des Artefakts integriert ist, um einen oder mehrere Defekte, die durch den Inspektor gesprochen werden, in den einen oder die mehreren strukturierten Defekte, die durch das Domänenmodell dargestellt sind, umzuwandeln.

7. System (100) nach Anspruch 5, wobei der Defekttyp, die Defektstelle und der Unterabschnitt des Artefakts aus der einen oder den mehreren Spracheingaben von dem Inspektor identifiziert werden.

8. System (100) nach Anspruch 5, wobei der eine oder die mehreren strukturierten Defekte in mindestens einer von einer orthogonalen Ansicht, einer zweidimensionalen (2D) Ansicht, einer dreidimensionalen (3D) Ansicht des Artefakts, das zur Verifizierung inspiziert wird, dargestellt sind.

9. Ein oder mehrere nichtflüchtige maschinenlesbare Informationsspeichermedien, umfassend eine oder mehrere Anweisungen, die, wenn sie durch einen oder mehrere Hardwareprozessoren ausgeführt werden, bewirken:
Empfangen, über eine Eingabe/Ausgabe(E/A)-Schnittstelle, einer oder mehrerer Spracheingaben von einem Inspektor, während ein Artefakt inspiziert wird, wobei das Artefakt eine physische Entität ist, die einer Inspektion unterzogen wird;
Vorverarbeiten der einen oder mehreren Spracheingaben des Inspektors, um Rauschen unter Verwendung einer vordefinierten Filtertechnik zu entfernen;
Umwandeln der einen oder mehreren vorverarbeiteten Spracheingaben in einen vordefinierten Sprachtext unter Verwendung einer vordefinierten Sprachübersetzungstechnik, um Einheitlichkeit sicherzustellen;
**dadurch gekennzeichnet, dass** die vordefinierte Sprachübersetzungstechnik ein universelles Sprachmodell und ein kundenspezifisches Sprachmodell beinhaltet, und
dadurch, dass die eine oder die mehreren Anweisungen, die, wenn sie durch den einen oder die mehreren Hardwareprozessoren ausgeführt werden, ferner bewirken:
Umwandeln des vordefinierten Sprachtexts in einen oder mehrere strukturierte Defekte für ein strukturiertes Defektprotokoll auf einem Domänenmodell eines zu inspizierenden Artefakts unter Verwendung eines großen Sprachmodells (LLM);
Analysieren des strukturierten Defektprotokolls, um einen Defektnamen, einen Defekttyp und eine Defektstelle auf jeden Unterabschnitt der physischen Entität, die in dem Domänenmodell dargestellt ist, unter Verwendung des großen Sprachmodells (LLM) abzubilden; und
Umwandeln des analysierten einen oder der analysierten mehreren strukturierten Defekte in ein Sprachformat, um eine effektive Kommunikation an einen Benutzer zu Reparatur- und Berichtszwecken zu erleichtern.

10. Ein oder mehrere nichtflüchtige maschinenlesbare Informationsspeichermedien nach Anspruch 9, wobei ein Sprache-zu-Text-Umwandlungsmodell mit dem großen Sprachmodell und dem Domänenmodell des Artefakts integriert ist, um einen oder mehrere Defekte, die durch den Inspektor gesprochen werden, in den einen oder die mehreren strukturierten Defekte, die durch das Domänenmodell dargestellt sind, umzuwandeln.

11. Ein oder mehrere nichtflüchtige maschinenlesbare Informationsspeichermedien nach Anspruch 9, wobei der Defekttyp, die Defektstelle und der Unterabschnitt des Artefakts aus der einen oder den mehreren Spracheingaben von dem Inspektor identifiziert werden.

12. Ein oder mehrere nichtflüchtige maschinenlesbare Informationsspeichermedien nach Anspruch 9, wobei der eine oder die mehreren strukturierten Defekte in mindestens einer von einer orthogonalen Ansicht, einer zweidimensionalen (2D) Ansicht, einer dreidimensionalen (3D) Ansicht des Artefakts, das zur Verifizierung inspiziert wird, dargestellt sind.

## Revendications

1. Procédé mis en œuvre par processeur (300) comprenant :
la réception (302), par l'intermédiaire d'une interface d'entrée/sortie (E/S), d'une ou plusieurs entrées vocales en provenance d'un inspecteur tout en inspectant un artefact, dans lequel l'artefact est une entité physique soumise à une inspection ;
le prétraitement (304), par l'intermédiaire d'un ou plusieurs processeurs matériels, des une ou plusieurs entrées vocales de l'inspecteur pour éliminer le bruit en utilisant une technique de filtrage prédéfinie ;
la conversion (306), par l'intermédiaire des un ou plusieurs processeurs matériels, des une ou plusieurs entrées vocales prétraitées en un texte de langage prédéfini en utilisant une technique de traduction de langage prédéfinie pour garantir une uniformité ;
**caractérisé en ce que** la technique de traduction de langage prédéfinie comprend un modèle de langage universel, et un modèle de parole personnalisé, et **en ce que** le procédé comprend en outre :
la transformation (308), par l'intermédiaire des un ou plusieurs processeurs matériels, du texte de langage prédéfini en un ou plusieurs défauts structurés pour un journal de défauts structurés sur un modèle de domaine d'artefact en cours d'inspection en utilisant un grand modèle de langage (LLM) ;
l'analyse (310), par l'intermédiaire des un ou plusieurs processeurs matériels, du journal de défauts structurés pour mettre en correspondance un nom de défaut, un type de défaut, et un emplacement de défaut avec chaque sous-section de l'entité physique représentée dans le modèle de domaine en utilisant le grand modèle de langage (LLM) ; et
la conversion (312), par l'intermédiaire des un ou plusieurs processeurs matériels, des un ou plusieurs défauts structurés analysés en un format vocal pour faciliter une communication efficace à un utilisateur à des fins de réparation et de rapport.

2. Procédé mis en œuvre par processeur (300) selon la revendication 1, dans lequel un modèle de conversion de voix en texte est intégré avec le grand modèle de langage et le modèle de domaine d'artefact pour convertir un ou plusieurs défauts prononcés par l'inspecteur en les un ou plusieurs défauts structurés représentés par le modèle de domaine.

3. Procédé mis en œuvre par processeur (300) selon la revendication 1, dans lequel le type de défaut, l'emplacement de défaut et la sous-section de l'artefact sont identifiés à partir des une ou plusieurs entrées vocales en provenance de l'inspecteur.

4. Procédé mis en œuvre par processeur (300) selon la revendication 1, dans lequel les un ou plusieurs défauts structurés sont représentés dans au moins l'une d'une vue orthogonale, d'une vue bidimensionnelle (2D), d'une vue tridimensionnelle (3D) de l'artefact en cours d'inspection pour vérification.

5. Système (100) comprenant :
une mémoire (110) stockant des instructions ;
une ou plusieurs interfaces d'entrée/sortie (E/S) (104) ; et
un ou plusieurs processeurs matériels (108) couplés à la mémoire (110) par l'intermédiaire des une ou plusieurs interfaces E/S (104), dans lequel les un ou plusieurs processeurs matériels (108) sont configurés par les instructions pour :
recevoir une ou plusieurs entrées vocales en provenance d'un inspecteur tout en inspectant un artefact, dans lequel l'artefact est une entité physique soumise à une inspection ;
prétraiter les une ou plusieurs entrées vocales de l'inspecteur pour éliminer le bruit en utilisant une technique de filtrage prédéfinie ;
convertir les une ou plusieurs entrées vocales prétraitées en un texte de langage prédéfini en utilisant une technique de traduction de langage prédéfinie pour garantir une uniformité ;
**caractérisé en ce que** la technique de traduction de langage prédéfinie comprend un modèle de langage universel, et un modèle de parole personnalisé, et **en ce que** les un ou plusieurs processeurs matériels (108) sont en outre configurés par les instructions pour :
transformer le texte de langage prédéfini en un ou plusieurs défauts structurés pour un journal de défauts structurés sur un modèle de domaine d'artefact en cours d'inspection en utilisant un grand modèle de langage (LLM) ;
analyser le journal de défauts structurés pour mettre en correspondance un nom de défaut, un type de défaut, et un emplacement de défaut avec chaque sous-section de l'entité physique représentée dans le modèle de domaine en utilisant le grand modèle de langage (LLM) ; et
convertir les un ou plusieurs défauts structurés analysés en un format vocal pour faciliter une communication efficace à un utilisateur à des fins de réparation et de rapport.

6. Système (100) selon la revendication 5, dans lequel un modèle de conversion de voix en texte est intégré avec le grand modèle de langage et le modèle de domaine d'artefact pour convertir un ou plusieurs défauts prononcés par l'inspecteur en les un ou plusieurs défauts structurés représentés par le modèle de domaine.

7. Système (100) selon la revendication 5, dans lequel le type de défaut, l'emplacement de défaut et la sous-section de l'artefact sont identifiés à partir des une ou plusieurs entrées vocales en provenance de l'inspecteur.

8. Système (100) selon la revendication 5, dans lequel les un ou plusieurs défauts structurés sont représentés dans au moins l'une d'une vue orthogonale, d'une vue bidimensionnelle (2D), d'une vue tridimensionnelle (3D) de l'artefact en cours d'inspection pour vérification.

9. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, par l'intermédiaire d'une interface d'entrée/sortie (E/S), d'une ou plusieurs entrées vocales en provenance d'un inspecteur tout en inspectant un artefact, dans lequel l'artefact est une entité physique soumise à une inspection ;
le prétraitement des une ou plusieurs entrées vocales de l'inspecteur pour éliminer le bruit en utilisant une technique de filtrage prédéfinie ;
la conversion des une ou plusieurs entrées vocales prétraitées en un texte de langage prédéfini en utilisant une technique de traduction de langage prédéfinie pour garantir une uniformité ;
**caractérisé en ce que** la technique de traduction de langage prédéfinie comprend un modèle de langage universel, et un modèle de parole personnalisé, et **en ce que** les une ou plusieurs instructions qui, lorsqu'elles sont exécutées par les un ou plusieurs processeurs matériels, amènent en outre :
la transformation du texte de langage prédéfini en un ou plusieurs défauts structurés pour un journal de défauts structurés sur un modèle de domaine d'artefact en cours d'inspection en utilisant un grand modèle de langage (LLM) ;
l'analyse du journal de défauts structurés pour mettre en correspondance un nom de défaut, un type de défaut, et un emplacement de défaut avec chaque sous-section de l'entité physique représentée dans le modèle de domaine en utilisant le grand modèle de langage (LLM) ; et
la conversion des un ou plusieurs défauts structurés analysés en un format vocal pour faciliter une communication efficace à un utilisateur à des fins de réparation et de rapport.

10. Un ou plusieurs supports de stockage d'informations lisibles par machine non transitoires selon la revendication 9, dans lequel un modèle de conversion de voix en texte est intégré avec le grand modèle de langage et le modèle de domaine d'artefact pour convertir un ou plusieurs défauts prononcés par l'inspecteur en les un ou plusieurs défauts structurés représentés par le modèle de domaine.

11. Un ou plusieurs supports de stockage d'informations lisibles par machine non transitoires selon la revendication 9, dans lequel le type de défaut, l'emplacement de défaut et la sous-section de l'artefact sont identifiés à partir des une ou plusieurs entrées vocales en provenance de l'inspecteur.

12. Un ou plusieurs supports de stockage d'informations lisibles par machine non transitoires selon la revendication 9, dans lequel les un ou plusieurs défauts structurés sont représentés dans au moins l'une d'une vue orthogonale, d'une vue bidimensionnelle (2D), d'une vue tridimensionnelle (3D) de l'artefact en cours d'inspection pour vérification.
